# FASCICULE DE BREVET EUROPEEN

(11) **EP 2 637 747 B1**
(45) Date de publication et mention de la délivrance du brevet: **10.02.2016**
(21) Numéro de dépôt: 11802471.0
(22) Date de dépôt: 04.11.2011
(51) Int. Cl.: A62B 35/00

(54) **DISPOSITIF D'ARRIMAGE DE SÉCURITÉ ET ENSEMBLE D'ARRIMAGE POURVU D'UN TEL DISPOSITIF**
SICHERHEITSBEFESTIGUNGSVORRICHTUNG UND SICHERUNGSANORDNUNG MIT EINER SOLCHEN VORRICHTUNG
SAFETY SECURING DEVICE AND SECURING ASSEMBLY COMPRISING SUCH A DEVICE

(30) Priorité: 08.11.2010 FR 1004357
(43) Date de publication de la demande: 18.09.2013
(73) Titulaire: Dehondt, Thierry Jean Alain Cornil, 51430 Tinqueux (FR)
(72) Inventeur: LE GALL, François Jean Victor, F-75018 Paris (FR); DE VISMES, Bertrand Marie Pierre Bruno, F-78000 Versailles (FR)
(74) Mandataire: Sayettat, Julien Christian
(86) Numéro de dépôt international: PCT/FR2011/052578
(87) Numéro de publication internationale: WO 2012/062987

(56) Documents cités:
- US-A1- 2009 200 107
- US-A1- 2010 012 425

## Description

L'invention concerne un dispositif d'arrimage de sécurité et un ensemble d'arrimage pourvu d'un tel dispositif.

Il est connu de réaliser un dispositif d'arrimage de sécurité comprenant deux mousquetons destinés à recevoir un élément d'arrimage, chacun desdits mousquetons comprenant :
- un crochet pourvu d'une ouverture d'introduction dudit élément,
- une porte de fermeture de ladite ouverture, ladite porte présentant une position ouverte de réception dudit élément dans ledit crochet et une position fermée de maintien dudit élément dans ledit crochet,
- un moyen de verrouillage de ladite porte couplé à un moyen de contrainte agencé pour activer ledit moyen de verrouillage lorsque ladite porte est fermée.

Ce dispositif est notamment intégré dans un ensemble comprenant en outre un harnais d'arrimage d'une personne, les mousquetons étant solidarisés audit harnais.

Un tel dispositif est notamment utilisable dans des activités d'accro-branches ou d'escalade, ou encore en vue de sécuriser les opérateurs de chantier travaillant en hauteur.

Le fait de disposer de deux mousquetons permet à l'utilisateur de passer d'un élément d'arrimage à l'autre en étant toujours en condition de sécurité; pour ce faire, l'utilisateur s'assure que, à tout instant, au moins un mousqueton est arrimé à un élément d'arrimage.

Cependant, un tel dispositif ne permet pas d'assurer une sécurité optimale à l'utilisateur qui, par inadvertance, peut se trouver dans une situation ou aucun mousqueton n'est arrimé.

Des dispositifs d'arrimage de sécurité sont déjà connus de l'art antérieur, voir par exemple les documents US 2009/0200107 A et US 2010/0012425 A.

L'invention a pour but de pallier cet inconvénient.

A cet effet, et selon un premier aspect, l'invention propose un dispositif d'arrimage de sécurité comprenant deux mousquetons destinés à recevoir un élément d'arrimage, chacun desdits mousquetons comprenant :
- un crochet pourvu d'une ouverture d'introduction dudit élément,
- un moyen de détection agencé pour pouvoir être activé par introduction dudit élément dans ledit crochet,
- une porte de fermeture de ladite ouverture, ladite porte présentant une position ouverte de réception dudit élément dans ledit crochet et une position fermée de maintien dudit élément dans ledit crochet,
- un moyen de verrouillage de ladite porte couplé à un moyen de contrainte agencé pour activer ledit moyen de verrouillage lorsque ladite porte est fermée,
lesdits mousquetons étant reliés entre eux par des moyens de transmission reliant respectivement le moyen de détection d'un mousqueton au moyen de verrouillage de l'autre mousqueton, lesdits moyens de transmission étant agencés de sorte que l'activation du moyen de détection d'un mousqueton, quel qu'il soit, entraîne la désactivation du moyen de verrouillage de l'autre mousqueton.

Ainsi, on garantit que la désactivation du moyen de verrouillage d'un mousqueton, quel qu'il soit, ne peut être effectuée tant que le moyen de détection de l'autre mousqueton n'a pas été activé.

En d'autres termes, on empêche le retrait de l'élément d'arrimage d'un mousqueton tant que l'introduction d'un élément d'arrimage dans l'autre mousqueton n'est pas détectée.

Selon un deuxième aspect, l'invention propose un ensemble d'arrimage de sécurité d'une personne, ledit ensemble comprenant un harnais et un dispositif tel que décrit ci-dessus.

D'autres particularités et avantages de l'invention apparaîtront dans la description qui suit, faite en référence aux figures jointes dans lesquelles :
- les figures 1 sont des vues partielles selon un côté d'un mousqueton d'un dispositif selon un mode de réalisation, la porte dudit mousqueton étant ouverte de manière à permettre la réception d'un élément d'arrimage (figure 1 a) et fermée avec l'élément d'arrimage introduit dans ledit mousqueton (figure 1 b),
- la figure 2 est une vue analogue à la figure 1 b selon un côté opposé à celui des figures 1,
- les figures 3 sont analogues aux figures 1 selon une variante de réalisation,
- la figure 4 est une vue schématique générale en perspective, selon une réalisation, d'un ensemble d'arrimage comprenant un dispositif selon l'invention,
- la figure 5 est une vue en perspective partielle d'un mousqueton d'un dispositif selon une variante de réalisation,
- les figures 6 sont des vues latérales correspondant à la figure 5, le moyen de verrouillage annexe étant activé (figure 6a) et désactivé (figure 6b),
- la figure 7 est vue schématique détaillée en perspective d'un ensemble d'arrimage selon une variante de réalisation de celle de la figure 4.

En référence aux figures, on décrit un dispositif 1 d'arrimage de sécurité comprenant deux mousquetons 2 destinés à recevoir un élément 3 d'arrimage, chacun desdits mousquetons comprenant :
- un crochet 4 pourvu d'une ouverture 5 d'introduction dudit élément,
- un moyen de détection 6 agencé pour pouvoir être activé en détection par introduction dudit élément dans ledit crochet,
- une porte 7 de fermeture de ladite ouverture, ladite porte présentant une position ouverte de réception dudit élément dans ledit crochet et une position fermée de maintien dudit élément dans ledit crochet,
- un moyen de verrouillage 8 de ladite porte couplé à un moyen de contrainte 9 agencé pour activer ledit moyen de verrouillage lorsque ladite porte est fermée,
lesdits mousquetons étant reliés entre eux par des moyens de transmission 10 reliant respectivement le moyen de détection 6 d'un mousqueton au moyen de verrouillage 8 de l'autre mousqueton, lesdits moyens de transmission étant agencés de sorte que l'activation du moyen de détection 6 d'un mousqueton, quel qu'il soit, entraîne la désactivation du moyen de verrouillage 8 de l'autre mousqueton.

Comme on le verra dans les réalisations représentées, la porte 7 est activée en position fermée par introduction de l'élément 3 qui transmet un effort sur ladite porte, et il en résulte une activation du moyen de verrouillage 8 correspondant.

Dans des modes de réalisation alternatifs non décrits, il peut être prévu que la porte 7 soit contrainte vers sa position fermée sous l'effet d'un moyen ressort, la position ouverte de la porte étant réalisée de façon temporaire lors de l'introduction de l'élément 3 dans le mousqueton 2 et ladite porte restant en position fermée lorsqu'elle n'est pas sollicité à l'encontre dudit moyen ressort.

Selon une réalisation, les deux mousquetons 2 sont analogues.

Selon une réalisation non représentée, le moyen contrainte 9 est intégré au moyen de verrouillage 8, ledit moyen de verrouillage étant formé notamment par une lame élastique.

Selon les réalisations représentées, au moins un moyen de détection 6 est une pièce montée mobile par rapport au crochet 4 entre une position de non détection et une position de détection.

Selon les réalisations représentées, au moins un moyen de verrouillage 8 est une pièce montée mobile par rapport au crochet 4 entre une position de verrouillage et une position de déverrouillage.

Selon les réalisation représentées, au moins un moyen de transmission 10 comprend un câble 11 reliant un moyen de détection 6 à un moyen de verrouillage 8, lesdits moyens étant sous forme de pièces montées mobiles par rapport au crochet 4, ledit moyen de transmission étant monté de sorte que l'activation dudit moyen de détection actionne ledit câble 11 - ici en traction - de manière à désactiver ledit moyen de verrouillage.

En particulier, on met en oeuvre ici un « câble Bowden », c'est à dire que le câble 11 est monté coulissant dans une gaine 12 dont chaque extrémité est montée à un crochet 4 respectif, ledit câble pouvant coulisser dans ladite gaine.

Comme évoqué précédemment, les deux mousquetons 2 peuvent être analogues. Il en résulte qu'ils sont tous deux pourvus de moyens de détection 6 et de verrouillage 8 sous forme de pièces montées mobiles par rapport au crochet 4. En outre, il peut être prévu deux moyens de transmission 10 comprenant un câble 11 reliant chaque moyen de détection 6 au moyen de verrouillage 8 correspondant.

Selon les réalisations représentées, au moins un crochet 4 comprend une zone 13 de réception de l'élément 3 - en regard de laquelle vient se positionner ledit élément une fois introduit dans ledit crochet -, un portillon 14 présentant deux branches 15,16 étant monté en rotation sur ledit crochet, ledit portillon étant agencé de manière à présenter une configuration de réception dudit élément entre lesdites branches, à travers l'ouverture 5, et une configuration de logement dudit élément entre lesdites branches et ladite zone, la porte 7 étant formée par l'une desdites branches 16.

Dans un tel agencement, le portillon 14 est actionné en configuration de logement par appui de l'élément 3 contre la branche 15 lors de son introduction dans le mousqueton 2, ledit élément transmettant un effort sur ledit portillon, et donc sur la porte 7.

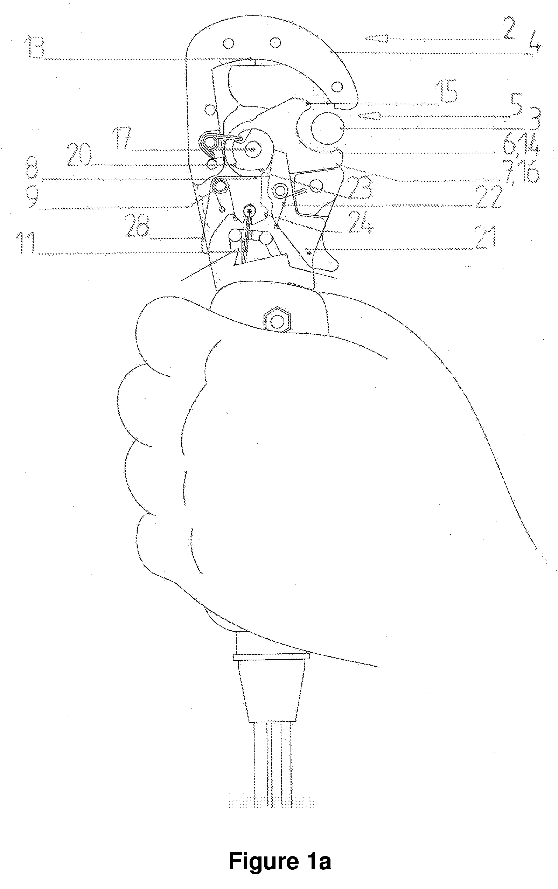

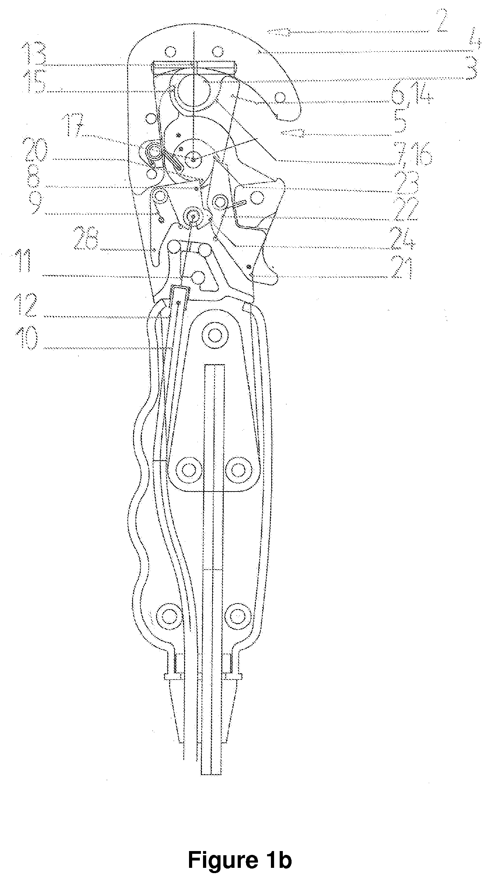

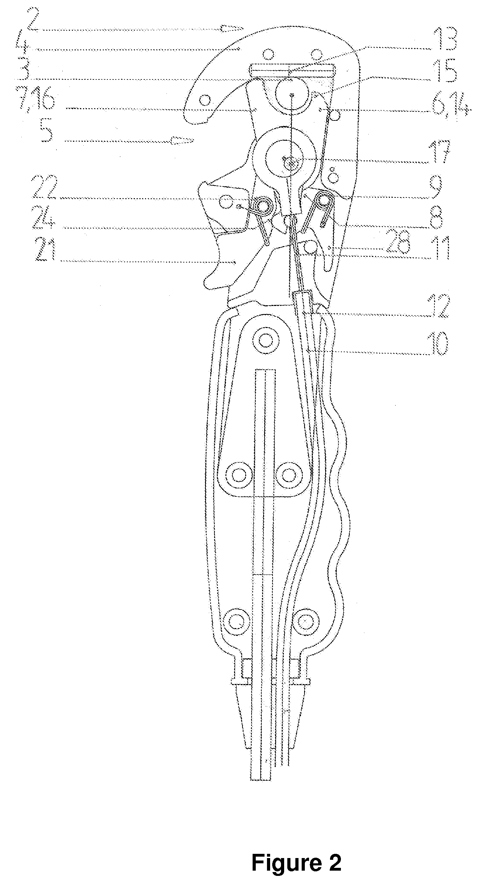

Selon la réalisation des figures 1 et 2, le moyen de détection 6 est formé par le portillon 14, le câble 11 correspondant étant relié à distance de son axe 17 de rotation, la position de non détection correspondant à la configuration de réception et la position de détection correspondant à la configuration de logement.

Il est en outre prévu ici que le portillon 14 soit couplé à un ressort bi stable l'entraînant vers l'une ou l'autre de ses configurations, de sorte qu'il soit requis un effort pour le passer d'une configuration à l'autre.

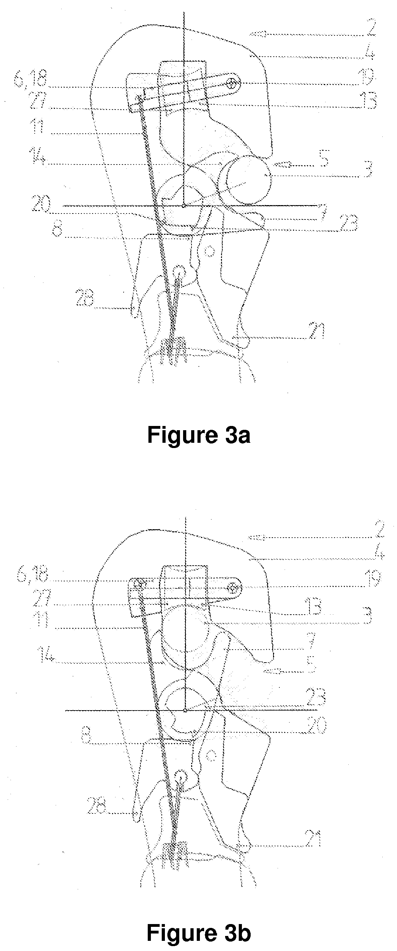

Selon la variante de la figure 3, le moyen de détection 6 est formé par un levier 18 monté en rotation par rapport au crochet 4 en regard de la zone 13 de réception, ledit levier étant mobile entre une position de non détection (figure 3a), où il est écarté de ladite zone vers l'intérieur dudit crochet, et une position de détection (figure 3b), où il est rapproché de ladite zone, le câble 11 étant relié à distance de l'axe 19 de rotation dudit levier.

Dans cette réalisation, le levier 18 est mis en position de détection par appui de l'élément 3 contre lui.

Une telle réalisation permet de détecter la présence effective de l'élément 3, et non uniquement son introduction dans le crochet 4, comme c'est le cas dans la réalisation décrite plus haut.

Pour permettre un bon coulissement de l'élément 3 contre le levier 18, on prévoit ici le montage d'une poulie 27 sur ledit levier.

Selon les réalisations représentées, le portillon 14 comprend une première dent 20, le moyen de verrouillage 8 étant monté en rotation par rapport au crochet 4 et le moyen de contrainte 9 étant sous forme d'un ressort, lesdits moyens étant respectivement agencés pour mettre ledit moyen de verrouillage en prise avec ladite dent lorsque ledit portillon est en configuration de logement, de manière à activer ledit moyen de verrouillage.

Selon les réalisations représentées, au moins un mousqueton 2 - et en particulier les deux lorsque les mousquetons 2 sont analogues - comprend un moyen de verrouillage additionnel 21 de la porte 7, ledit moyen étant sous forme d'une pièce montée mobile par rapport au crochet 4 entre une position de verrouillage et une position de déverrouillage, ledit moyen de verrouillage additionnel étant couplé à un moyen de contrainte additionnel 22 agencé pour l'activer lorsque ladite porte est fermée, ledit moyen de verrouillage additionnel comprenant une zone d'appui permettant de le désactiver par action de l'utilisateur.

Un tel agencement permet de bénéficier d'une « double sécurité ».

En effet, lorsque les deux mousquetons 2 reçoivent chacun un élément 3 d'arrimage - ce qui correspond notamment aux situations où l'utilisateur vient d'ancrer un mousqueton 2 à un nouvel élément 3 alors que l'autre mousqueton 2 était déjà ancré - leurs moyens de verrouillage 8 respectifs sont tous les deux désactivés.

Il en résulte un risque temporaire pour l'utilisateur que les deux mousquetons 2 se désengagent des éléments 3 d'arrimage.

La présence du moyen de verrouillage additionnel 21 permet de lever ce risque puisque l'utilisateur est alors obligé de réaliser deux manoeuvres simultanées intentionnelles pour désengager les éléments 3 des deux mousquetons 2.

On notera que, le moyen de verrouillage additionnel 21 étant éloigné de la trajectoire de l'élément 3 sur les réalisations représentées, on limite le risque d'une blessure de la main de l'utilisateur par ledit élément.

Comme précédemment et de façon non représentée, on peut prévoir que le moyen de contrainte additionnel 22 soit intégré au moyen verrouillage additionnel 21 qui serait notamment formé par une lame élastique.

Selon les réalisations représentées, le portillon 14 comprend une deuxième dent 23, le moyen de verrouillage additionnel 21 étant monté en rotation par rapport au crochet 4, le moyen de contrainte additionnel 22 étant sous forme d'un ressort, lesdits moyens étant respectivement agencés pour mettre ledit moyen de verrouillage additionnel en prise avec ladite dent lorsque ledit portillon est en configuration de logement, de manière à activer ledit moyen de verrouillage additionnel.

Selon les réalisations représentées, le moyen de verrouillage 8 comprend une surface 24 de butée, le moyen de verrouillage additionnel 21 étant agencé pour être en appui contre ladite surface lorsque ledit moyen de verrouillage 8 est activé, de manière à ne pouvoir être désactivé, et pour que ledit appui soit supprimé par désactivation dudit moyen de verrouillage 8, de manière à permettre sa désactivation.

Comme représenté, il est prévu un moyen de déverrouillage d'urgence 28 - formé ici par un ergot, intégré au moyen de verrouillage 8, à actionner en traction avec un doigt - ledit moyen de déverrouillage d'urgence permettant de déverrouiller les deux mousquetons 2 dans toutes les situations, notamment en cas de rupture du câble 11.

De façon non représentée, on peut prévoir que la distance entre l'embout de câble 11 et l'embout de gaine 12 soit réglable par mise en place d'un élément d'embout de gaine, tel qu'on peut en trouver notamment pour le réglage la tension de câbles de freins de bicyclette, basé sur un système de vis ou de goupilles à fixer dans un orifice du mousqueton 2, ledit mousqueton étant pourvu de plusieurs orifices de réglage possible. On peut ainsi régler la tension de câble 11.

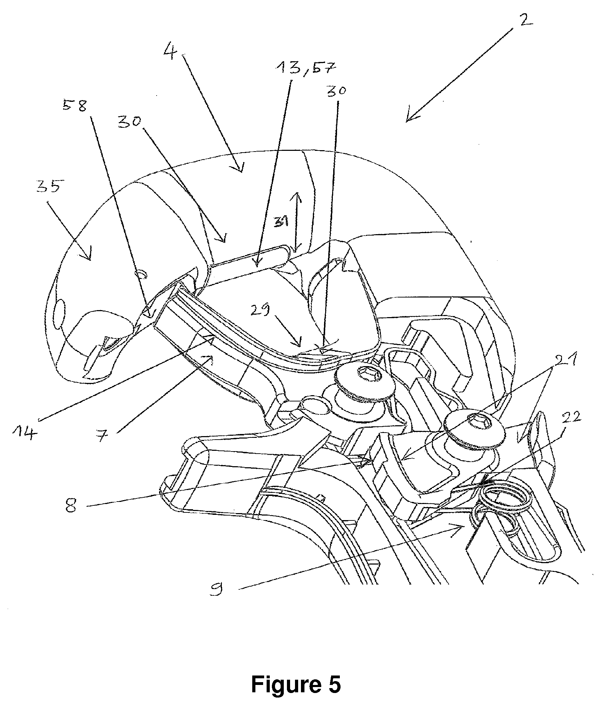

La figure 5 représente une variante de réalisation d'un mousqueton 2 présentant les caractéristiques décrites ci-après :
- le moyen de verrouillage additionnel 21 est monté sur le même axe que celui du moyen de verrouillage 8 ;
- les moyens de contrainte 9 et de contrainte additionnel 22 sont confondus, étant sous la forme d'un même ressort ;
- les crochets 4 présentent une extrémité supérieure libre en surplomb 35 suffisant pour que le verrouillage d'une porte 7 donnée se fasse, lors de la rotation de l'autre porte 7 en vue d'extraire l'élément 3 inséré dedans, avant que l'on soit en situation d'extraction dudit élément. On notera que cette caractéristique s'applique également dans les réalisations décrites en figures 1 à 3 ;
- la zone d'appui 13 est sous la forme d'une pièce 57 d'anti-usure et de glissement sur l'élément 3, de haute résistance à l'abrasion, d'une dureté très importante et d'une rugosité très faible, rapportée en haut de crochet 4, ladite pièce étant notamment interchangeable pour permettre de la remplacer lorsqu'elle est usagée. Elle peut se présenter sous la forme d'une pièce fixe ou montée en rotation de manière à tourner lors du glissement de l'élément d'arrimage 3 dans le crochet 4. Ici, elle se présente sous la forme d'un axe ;
- le crochet 4, autour de la zone d'appui 13, est biseauté de part et d'autre, de même que la zone 29 située entre les branches 15,16, de manière à éviter un arc-boutement du crochet 4, bloquant son coulissement, lorsque l'élément 3 est incliné de façon importante par rapport à la perpendiculaire au plan défini par lesdites branches ; les portées 30 définies par les biseaux respectifs sont notamment définies de manière à présenter une longueur de pente 31 proche du pas de l'élément 3 lorsque ce dernier est un câble obtenu par entortillement en hélice d'une pluralité de sous câbles. Dans la réalisation représentée, les branches 15,16 sont également biseautées, de manière à prendre en compte un appui de l'élément 3 sur lesdites branches ;
- on notera la possibilité d'utiliser un tournevis plat ou outil analogue pour pousser le moyen de verrouillage 8 vers le bas lorsque l'on souhaite effectuer un déverrouillage d'urgence du portillon 14.

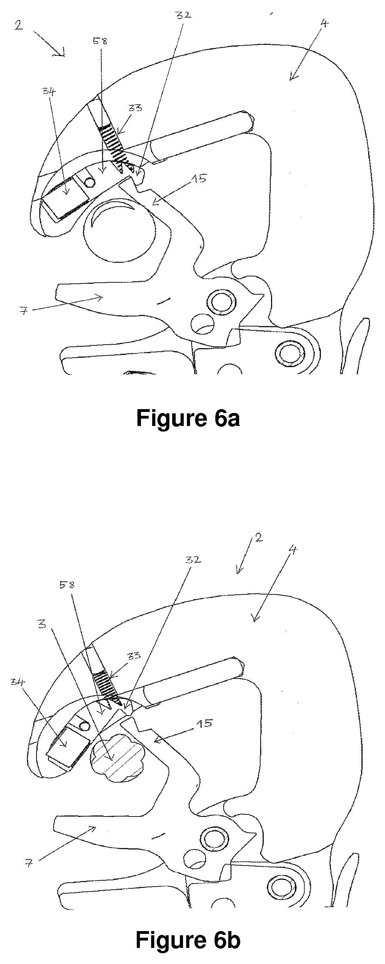

In est prévu en outre un moyen de verrouillage annexe 58 dont le fonctionnement est décrit en relation avec les figures 6. On notera que ce moyen 58 pourrait être incorporé, de façon non représentée, aux réalisations décrites en figures 1 à 3.

Sa fonction est d'éviter que le dispositif 1 puisse être leurré par l'introduction d'un autre objet qu'un élément d'arrimage 3, notamment par un doigt d'utilisateur.

A cet effet, en partant du fait que l'élément 3 est usuellement un câble métallique attirable par un aimant - voire une tige métallique telle qu'un barreau d'échelle - on prévoit sur le dispositif 1 un moyen de verrouillage annexe 58 défini comme suit.

Le moyen de verrouillage annexe 58 comprend un verrou 32 mobile entre une position de verrouillage de la porte 7 en position ouverte, ici par blocage de la branche 15, et une position escamotée de libération de l'actionnement de ladite porte en position fermée, ledit verrou étant actionné vers sa position de verrouillage par un ressort 33, ledit moyen de verrouillage annexe étant pourvu d'un aimant 34 destiné à interagir avec l'élément 3 pour actionner ledit verrou vers sa position escamotée.

Ainsi, l'introduction d'un doigt ou d'un objet non attirable par un aimant ne permet pas de réaliser la fermeture de la porte 7 d'un mousqueton 2 donné, ceci du fait du verrouillage effectué par le verrou 32, et de libérer l'ouverture de la porte 7 de l'autre mousqueton 2.

Le verrou 32 est ici monté en rotation en partie supérieure du crochet 4.

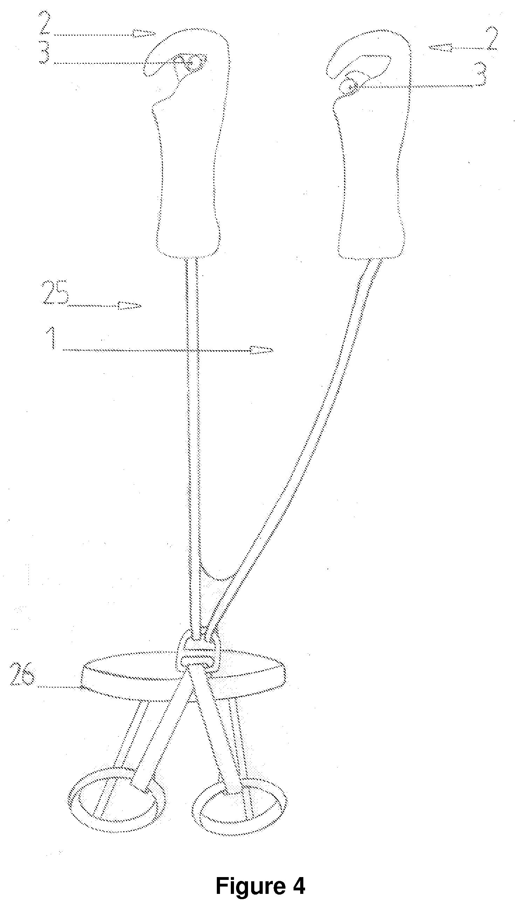

On décrit à présent, en référence à la figure 4, un ensemble 25 d'arrimage de sécurité d'une personne, ledit ensemble comprenant un harnais 26 et un dispositif 1, les mousquetons 2 étant solidarisés audit harnais, ici par des sangles.

Par harnais 26, on entend un dispositif permettant un arrimage d'une personne.

Dans le mode de réalisation représenté, le harnais 26 est à base de sangles confectionnées pour permettre une réception des jambes et du tronc de l'utilisateur.

Le harnais 26 est notamment pourvu de moyens de réglages, non représentés, permettant de l'adapter aux dimensions de l'utilisateur.

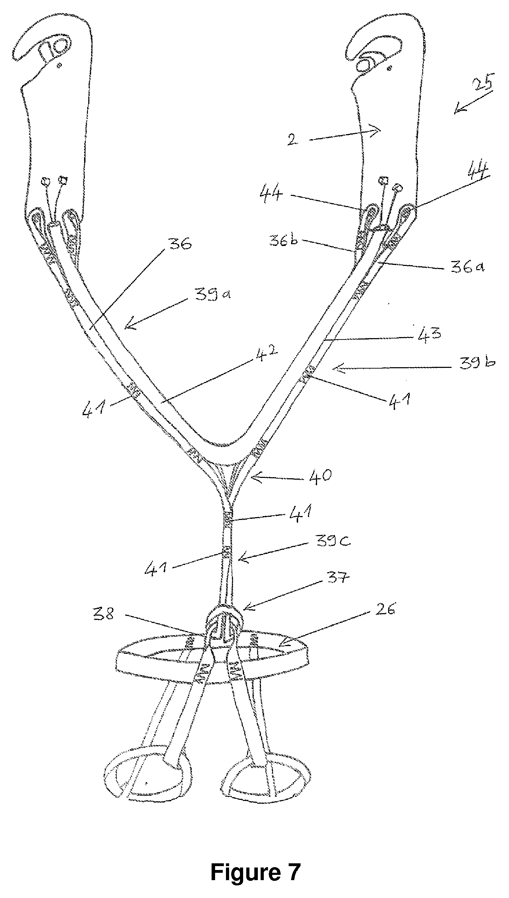

En référence à la figure 7, on décrit une variante de réalisation détaillée d'un ensemble 25 d'arrimage.

L'ensemble 25 comprend :
- le harnais 26,
- une sangle 36 - notamment en Dyneema ® -, de reprise d'effort en cas de sollicitation en traction entre les mousquetons 2 et ledit harnais, reliant entre eux lesdits mousquetons et passant par un point de liaison audit harnais, ici via un noeud 37 en tête d'alouette réalisé dans une boucle 38 issue dudit harnais, ladite sangle formant deux brins 39a,39b de liaison auxdits mousquetons et un lien 39c de liaison audit harnais issus d'une zone centrale 40, le brin 39c comprenant deux épaisseurs de sangle 36 cousues entre elles, par coutures 41,
- un fourreau 42 de protection entourant les éléments de transmission 10, une bordure 43 dudit fourreau étant cousue, par coutures 41 à ladite sangle, sauf sur une longueur de zone centrale 40, notamment sur une longueur de l'ordre de 5 à 10 cm, ce qui permet auxdits éléments de transmission de former une courbure de rayon suffisamment grand pour éviter une pliure accentuée risquant de les dégrader.

Dans la réalisation représentée, la sangle 36 est doublée, étant constituée de deux sous sangles élémentaires 36a,36b prenant en sandwich par couture la bordure 43 de fourreau et étant partiellement cousues l'une sur l'autre le long du brin 39c, ledit brin comprenant alors quatre épaisseurs de sous sangles élémentaires.

La sangle 36 se subdivise en deux au niveau de deux points d'accrochage 44 prévus sur les mousquetons 2.

Le brin 3c étant significativement plus souple que les brins 3a et 3b, on peut réaliser un entortillement à ce niveau sans dégrader l'ensemble 25.

En particulier on prévoit de ne pas de réaliser de couture 41 en partie centrale de sangle 36, de manière à permettre la réalisation du noeud 37.

La réalisation d'un noeud 37 permet la limitation du nombre de composants, la diminution du poids et la suppression du risque d'ouverture d'un composant tel qu'un maillon rapide ou mousqueton utilisé habituellement.

La sangle 36 peut éventuellement être de largeur variable, notamment dans la zone de liaison aux mousquetons 2, de manière à s'inscrire dans la largeur de l'intérieur desdits mousquetons.

On peut prévoir un dispositif, non représenté, de dissipation d'énergie dans le brin 39c relié au harnais 26, par exemple sous forme de couture fusible.

## Revendications

1. Dispositif (1) d'arrimage de sécurité comprenant deux mousquetons (2) destinés à recevoir un élément (3) d'arrimage, chacun desdits mousquetons comprenant :
• un crochet (4) pourvu d'une ouverture (5) d'introduction dudit élément,
• un moyen de détection (6) agencé pour pouvoir être activé par introduction dudit élément dans ledit crochet,
• une porte (7) de fermeture de ladite ouverture, ladite porte présentant une position ouverte de réception dudit élément dans ledit crochet et une position fermée de maintien dudit élément dans ledit crochet,
• un moyen de verrouillage (8) de ladite porte couplé à un moyen de contrainte (9) agencé pour activer ledit moyen de verrouillage lorsque ladite porte est fermée,
lesdits mousquetons étant reliés entre eux par des moyens de transmission (10) reliant respectivement le moyen de détection (6) d'un mousqueton au moyen de verrouillage (8) de l'autre mousqueton, **caractérisé en ce que** lesdits moyens de transmission sont agencés de sorte que l'activation du moyen de détection (6) d'un mousqueton, quel qu'il soit, entraîne la désactivation du moyen de verrouillage (8) de l'autre mousqueton.

2. Dispositif selon la revendication 1, **caractérisé en ce que** au moins un moyen de détection (6) est une pièce montée mobile par rapport au crochet (4) entre une position de non détection et une position de détection.

3. Dispositif selon la revendication 1 ou 2, **caractérisé en ce que** au moins un moyen de verrouillage (8) est une pièce montée mobile par rapport au crochet (4) entre une position de verrouillage et une position de déverrouillage.

4. Dispositif selon l'une quelconque des revendications 1 à 3, **caractérisé en ce que** au moins un moyen de transmission (10) comprend un câble (11) reliant un moyen de détection (6) à un moyen de verrouillage (8), ledit moyen de transmission étant monté de sorte que l'activation dudit moyen de détection actionne ledit câble (11) de manière à désactiver ledit moyen de verrouillage.

5. Dispositif selon l'une quelconque des revendications 1 à 4, **caractérisé en ce que** au moins un crochet (4) comprend une zone (13) de réception de l'élément (3), un portillon (14) présentant deux branches (15,16) étant monté en rotation sur ledit crochet, ledit portillon étant agencé de manière à présenter une configuration de réception dudit élément entre lesdites branches, à travers l'ouverture (5), et une configuration de logement dudit élément entre lesdites branches et ladite zone, la porte (7) étant formée par l'une desdites branches (16).

6. Dispositif selon la revendication 5, **caractérisé en ce que** le moyen de détection (6) est formé par le portillon (14), le câble (11) correspondant étant relié à distance de son axe (17) de rotation, la position de non détection correspondant à la configuration de réception et la position de détection correspondant à la configuration de logement.

7. Dispositif selon la revendication 5, **caractérisé en ce que** le moyen de détection (6) est formé par un levier (18) monté en rotation par rapport au crochet (4) en regard de la zone (13) de réception, ledit levier étant mobile entre une position de non détection, où il est écarté de ladite zone vers l'intérieur dudit crochet, et une position de détection, où il est rapproché de ladite zone, le câble (11) étant relié à distance de l'axe (19) de rotation dudit levier.

8. Dispositif selon l'une quelconque des revendications 5 à 7, **caractérisé en ce que** le portillon (14) comprend une première dent (20), le moyen de verrouillage (8) étant monté en rotation par rapport au crochet (4) et le moyen de contrainte (9) étant sous forme d'un ressort, lesdits moyens étant respectivement agencés pour mettre ledit moyen de verrouillage en prise avec ladite dent lorsque ledit portillon est en configuration de logement, de manière à activer ledit moyen de verrouillage.

9. Dispositif selon l'une quelconque des revendications 5 à 8, **caractérisé en ce que** au moins un mousqueton (2) comprend un moyen de verrouillage additionnel (21) de la porte (7), ledit moyen étant sous forme d'une pièce montée mobile par rapport au crochet (4) entre une position de verrouillage et une position de déverrouillage, ledit moyen de verrouillage additionnel étant couplé à un moyen de contrainte additionnel (22) agencé pour l'activer lorsque ladite porte est fermée, ledit moyen de verrouillage additionnel comprenant une zone d'appui permettant de le désactiver par action de l'utilisateur.

10. Dispositif selon la revendication 9, **caractérisé en ce que** le portillon (14) comprend une deuxième dent (23), le moyen de verrouillage additionnel (21) étant monté en rotation par rapport au crochet (4), le moyen de contrainte additionnel (22) étant sous forme d'un ressort, lesdits moyens étant respectivement agencés pour mettre ledit moyen de verrouillage additionnel en prise avec ladite dent lorsque ledit portillon est en configuration de logement, de manière à activer ledit moyen de verrouillage additionnel.

11. Dispositif selon l'une quelconque des revendications 1 à 10, **caractérisé en ce que** le crochet (4), autour de la zone d'appui (13), est biseauté de part et d'autre, de même que la zone (29) située entre les branches (15,16), de manière à éviter un arc-boutement dudit crochet bloquant son coulissement, lorsque l'élément (3) est incliné de façon importante par rapport à la perpendiculaire au plan défini par lesdites branches.

12. Dispositif selon l'une quelconque des revendications 1 à 11, **caractérisé en ce qu'**il comprend en outre un moyen de verrouillage annexe (58) qui comprend un verrou (32) mobile entre une position de verrouillage de la porte (7) en position ouverte et une position escamotée de libération de l'actionnement de ladite porte en position fermée, ledit verrou étant actionné vers sa position de verrouillage par un ressort (33), ledit moyen de verrouillage annexe étant pourvu d'un aimant (34) destiné à interagir avec l'élément (3) pour actionner ledit verrou vers sa position escamotée.

13. Ensemble (25) d'arrimage de sécurité d'une personne, ledit ensemble comprenant un harnais (26) et un dispositif selon l'une quelconque des revendications 1 à 12, les mousquetons (2) étant solidarisés audit harnais.

14. Ensemble selon la revendication 13, **caractérisé en ce qu'**il comprend :
• une sangle (36), de reprise d'effort en cas de sollicitation en traction entre les mousquetons (2) et le harnais (26), reliant entre eux lesdits mousquetons et passant par un point de liaison audit harnais, ladite sangle formant deux brins (39a,39b) de liaison auxdits mousquetons et un lien (39c) de liaison audit harnais issus d'une zone centrale (40), le brin (39c) comprenant deux épaisseurs de sangle (36) cousues entre elles, par coutures (41),
• un fourreau (42) de protection entourant les éléments de transmission (10), une bordure (43) dudit fourreau étant cousue, par coutures (41) à ladite sangle, sauf sur une longueur de zone centrale (40).

## Patentansprüche

1. Vorrichtung (1) zur Sicherung, zwei Karabinerhaken (2) umfassend, die dazu bestimmt sind, ein Zurrelement (3) aufzunehmen, wobei jeder der besagten Karabinerhaken folgendes umfasst:
- einen Haken (4), der mit einer Öffnung (5) zum Einführen des besagten Elements versehen ist,
- ein Erfassungsmittel (6), das angeordnet ist, um durch das Einführen des besagten Elements in den besagten Haken aktiviert werden zu können,
- eine Tür (7) zum Schließen der besagten Öffnung, wobei die besagte Tür eine offene Position zur Aufnahme des besagten Elements im besagten Haken aufweist, und eine geschlossene Position zum Halten des besagten Elements im besagten Haken,
- ein Verriegelungsmittel (8) der besagten Tür, das an ein Zwangsmittel (9) gekoppelt ist, das angeordnet ist, um das besagte Verriegelungsmittel zu aktivieren, wenn die besagte Tür geschlossen ist,
wobei die besagten Karabinerhaken durch Übertragungsmittel (10) miteinander verbunden sind, die jeweils das Erfassungsmittel (6) eines Karabinerhakens mit dem Verriegelungsmittel (8) des anderen Karabinerhakens verbinden, **dadurch gekennzeichnet, dass** die besagten Übertragungsmittel derart angeordnet sind, dass die Aktivierung des Erfassungsmittels (6) egal welches Karabinerhakens die Deaktivierung des Verriegelungsmittels (8) des anderen Karabinerhakens bewirkt.

2. Vorrichtung nach Anspruch 1, **dadurch gekennzeichnet, dass** zumindest ein Erfassungsmittel (6) ein Teil ist, das im Verhältnis zum Haken (4) zwischen einer Position der Nicht-Erfassung und einer Erfassungsposition beweglich montiert ist.

3. Vorrichtung nach Anspruch 1 oder 2, **dadurch gekennzeichnet, dass** zumindest ein Verriegelungsmittel (8) ein Teil ist, das im Verhältnis zum Haken (4) zwischen einer Verriegelungsposition und einer Entriegelungsposition beweglich montiert ist.

4. Vorrichtung nach irgendeinem der Ansprüche 1 bis 3, **dadurch gekennzeichnet, dass** zumindest ein Übertragungsmittel (10) ein Kabel (11) umfasst, das ein Erfassungsmittel (6) mit einem Verriegelungsmittel (8) verbindet, wobei das besagte Übertragungsmittel derart montiert ist, dass die Aktivierung des besagten Erfassungsmittels das besagte Kabel (11) betätigt, um das besagte Verriegelungsmittel zu deaktivieren.

5. Vorrichtung nach irgendeinem der Ansprüche 1 bis 4, **dadurch gekennzeichnet, dass** zumindest ein Haken (4) eine Zone (13) zur Aufnahme des Elements (3) umfasst, eine zwei Schenkel (15, 16) aufweisende Sperre (14), die drehend auf dem besagten Haken montiert ist, wobei die besagte Sperre angeordnet ist, um eine Aufnahmekonfiguration des besagten Elements zwischen den besagten Schenkeln, durch die Öffnung (5) darzustellen, sowie eine Sitzkonfiguration des besagten Elements zwischen den besagten Schenkeln und der besagten Zone, wobei die Tür (7) durch eine der besagten Schenkel (16) gebildet wird.

6. Vorrichtung nach Anspruch 5, **dadurch gekennzeichnet, dass** das Erfassungsmittel (6) durch die Sperre (14) gebildet wird, wobei das entsprechende Kabel (11) im Abstand zu seiner Rotationsachse (17) angeschlossen ist, und die Position der Nicht-Erfassung der Aufnahmekonfiguration, und die Erfassungsposition der Sitzkonfiguration entsprechen.

7. Vorrichtung nach Anspruch 5, **dadurch gekennzeichnet, dass** das Erfassungsmittel (6) durch einen Hebel (18) gebildet wird, der im Verhältnis zum Haken (4) gegenüber der Aufnahmezone (13) drehbar montiert ist, wobei der besagte Hebel zwischen einer Position der Nicht-Erfassung, in der er von der besagten Zone zur Innenseite des Hakens hin abgespreizt ist, und einer Erfassungsposition bewegt werden kann, in der er der besagten Zone angenähert ist, wobei das Kabel (11) im Abstand zur Rotationsachse (19) des besagten Hebels angeschlossen ist.

8. Vorrichtung nach irgendeinem der Ansprüche 5 bis 7, **dadurch gekennzeichnet, dass** die Sperre (14) einen ersten Zahn (20) umfasst, wobei das Verriegelungsmittel (8) im Verhältnis zum Haken (4) drehbar montiert ist, und das Zwangsmittel (9) in Form einer Feder ausgeführt ist, wobei die besagten Mittel jeweils angeordnet sind, um das besagte Verriegelungsmittel mit dem besagten Zahn in Eingriff zu bringen, wenn sich die besagte Sperre in der Sitzkonfiguration befindet, um das besagte Verriegelungsmittel zu aktivieren.

9. Vorrichtung nach irgendeinem der Ansprüche 5 bis 8, **dadurch gekennzeichnet, dass** zumindest ein Karabinerhaken (2) ein zusätzliches Mittel zum Verriegeln (21) der Tür (7) umfasst, wobei das besagte Mittel in Form eines Teils ausgeführt ist, das im Verhältnis zum Haken (4) beweglich zwischen einer Verriegelungsposition und einer Entriegelungsposition montiert ist, wobei das besagte zusätzliche Mittel zum Verriegeln an ein zusätzliches Zwangsmittel (22) gekoppelt ist, das angeordnet ist, um es zu aktivieren, wenn die besagte Tür geschlossen ist, wobei das besagte zusätzliche Mittel zum Verriegeln eine Andrückzone umfasst, mit der es durch Einwirkung des Benutzers deaktiviert werden kann.

10. Vorrichtung nach Anspruch 9, **dadurch gekennzeichnet, dass** die Sperre (14) einen zweiten Zahn (23) umfasst, wobei das zusätzliche Mittel zum Verriegeln (21) im Verhältnis zum Haken (4) drehbar montiert ist, und das zusätzliche Zwangsmittel (22) in Form einer Feder ausgeführt ist, und die besagten Mittel jeweils angeordnet sind, um das besagte zusätzliche Mittel zum Verriegeln mit dem besagten Zahn in Eingriff zu bringen, wenn sich die besagte Sperre in der Sitzkonfiguration befindet, um das besagte zusätzliche Mittel zum Verriegeln zu aktivieren.

11. Vorrichtung nach irgendeinem der Ansprüche 1 bis 10, **dadurch gekennzeichnet, dass** der Haken (4) um die Andrückzone (13) herum beiderseits ebenso abgeschrägt ist, wie die Zone (29) zwischen den Schenkeln (15, 16), um ein Verklemmen des besagten Hakens zu vermeiden, das seine Gleitbewegung blockieren würde, wenn das Element (3) im Verhältnis zur Senkrechten des Ebene stark geneigt wäre, die durch die besagten Schenkel definiert wird.

12. Vorrichtung nach irgendeinem der Ansprüche 1 bis 11, **dadurch gekennzeichnet, dass** sie darüber hinaus ein beigefügtes Verriegelungsmittel (58) umfasst, das einen Riegel (32) umfasst, der zwischen einer Verriegelungsposition der Tür (7) in der offenen Position und einer eingezogenen Position zur Freigabe der Betätigung der besagten Tür in der geschlossenen Position bewegt werden kann, wobei der besagte Riegel durch eine Feder (33) in seine Verriegelungsposition gebracht wird, und das besagte beigefügte Verriegelungsmittel mit einem Magneten (34) versehen ist, der dazu bestimmt ist, mit dem Element (3) zusammenzuwirken, um den besagten Riegel in seine eingezogene Position zu bringen.

13. Einheit (25) zur Sicherung einer Person, wobei die besagte Einheit ein Geschirr (26) und eine Vorrichtung nach irgendeinem der Ansprüche 1 bis 12 umfasst, wobei die Karabinerhaken (2) fest am besagten Geschirr angebracht sind.

14. Einheit nach Anspruch 13, **dadurch gekennzeichnet, dass** sie folgendes umfasst:
- einen Gurt (36) zur Kraftaufnahme im Falle einer Zugbeanspruchung zwischen den Karabinerhaken (2) und dem Geschirr (26), der die besagten Karabinerhaken miteinander verbindet und durch eine Verbindungsstelle mit dem besagten Geschirr führt, wobei der besagte Gurt zwei Stränge (39a, 39b) zur Verbindung mit den besagten Karabinerhaken und ein Band (39c) zur Verbindung mit dem besagten Geschirr aus einer mittleren Zone (40) bildet, und das Band (39c) zwei Gurtstärken (36) umfasst, die durch Nähte (41) miteinander vernäht sind.
- ein Schutzfutteral (42), das die Übertragungsmittel (10) umgibt, wobei eine Kante (43) des besagten Futterals außer auf einer Länge der mittleren Zone (40) durch Nähte (41) mit dem besagte Gurt vernäht ist.

## Claims

1. Safety securing device (1) comprising two karabiners (2) intended to receive a securing element (3), each of said karabiners comprising:
• a hook (4) provided with an opening (5) for introducing said element,
• a detection means (6) arranged to be able to be activated by introducing said element into said hook,
• a door (7) for closing said opening, said door having an open position for receiving said element in said hook and a closed position for holding said element in said hook,
• a means (8) for locking said door coupled to a constraint means (9) arranged to activate said locking means when said door is closed,
said karabiners being connected together by transmission means (10) respectively connecting the means (6) of detecting of one karabiner to the means (8) of locking of the other karabiner, **characterised in that** said transmission means are arranged so that the activation of the means (6) of detecting of one karabiner, whichever it may be, causes the deactivation of the means (8) of locking of the other karabiner.

2. Device according to claim 1, **characterised in that** at least one detection means (6) is a part mounted so as to be able to move with respect to the hook (4) between a non-detection position and a detection position.

3. Device according to claim 1 or 2, **characterised in that** at least one locking means (8) is a part mounted so as to be able to move with respect to the hook (4) between a locking position and an unlocking position.

4. Device according to any one of claims 1 to 3, **characterised in that** at least one transmission means (10) comprises a cable (11) connecting a detection means (6) to a locking means (8), said transmission means being mounted so that activation of said detection means actuates said cable (11) so as to deactivate said locking means.

5. Device according to any one of claims 1 to 4, **characterised in that** at least one hook (4) comprises a zone (13) for receiving the element (3), a gate (14) having two arms (15, 16) being mounted for rotation on said hook, said gate being arranged so as to have a configuration for receiving said element between said arms, through the opening (5), and a configuration for housing said element between said arms and said zone, the door (7) being formed by one of said arms (16).

6. Device according to claim 5, **characterised in that** the detection means (6) is formed by the gate (14), the corresponding cable (11) being connected at a distance from its rotation axis (17), the non-detection position corresponding to the reception configuration and the detection position corresponding to the housing configuration.

7. Device according to claim 5, **characterised in that** the detection means (6) is formed by a lever (18) mounted for rotation with respect to the hook (4) opposite the reception zone (13), said lever being able to move between a non-detection position, in which it is separated from said zone towards the inside of said hook, and a detection position, in which it is close to said zone, the cable (11) being connected at a distance from the rotation axis (19) of said lever.

8. Device according to any one of claims 5 to 7, **characterised in that** the gate (14) comprises a first tooth (20), the locking means (8) being mounted for rotation with respect to the hook (4) and the constraint means (9) being in the form of a spring, said means being respectively arranged to put said locking means in engagement with said tooth when said gate is in the housing configuration, so as to activate said locking means.

9. Device according to any one of claims 5 to 8, **characterised in that** at least one karabiner (2) comprises an additional means (21) for locking the door (7), said means being in the form of a part mounted so as to be able to move with respect to the hook (4) between a locking position and an unlocking position, said additional locking means being coupled to an additional constraint means (22) arranged so as to activate it when said door is closed, said additional locking means comprising an abutment zone for deactivating it by action of the user.

10. Device according to claim 9, **characterised in that** the gate (14) comprises a second tooth (23), the additional locking means (21) being mounted for rotation with respect to the hook (4), the additional constraint means (22) being in the form of a spring, said means being respectively arranged to put said additional locking means in engagement with said tooth when said gate is in the housing configuration, so as to activate said additional locking means.

11. Device according to any one of claims 1 to 10, **characterised in that** the hook (4), around the abutment zone (13), is bevelled on either side, just like the zone (29) situated between the arms (15, 16), so as to prevent buttressing of said hook blocking its sliding, when the element (3) is greatly inclined with respect to the perpendicular to the plane defined by said arms.

12. Device according to any one of claims 1 to 11, **characterised in that** it also comprises a supplementary locking means (58) that comprises a bolt (32) able to move between a position for locking the door (7) in the open position and a retracted position for releasing the actuation of said door in the closed position, said bolt being actuated towards its locking position by a spring (33), said supplementary locking means being provided with a magnet (34) intended to interact with the element (3) in order to actuate said bolt towards its retracted position.

13. Assembly (25) for the safety securing of a person, said assembly comprising a harness (26) and a device according to any one of claims 1 to 12, the karabiners (2) being secured to said harness.

14. Assembly according to claim 13, **characterised in that** it comprises:
• a strap (36) for taking up force in the event of tensile stress between the karabiners (2) and the harness (26), connecting together said karabiners and passing through a point of connection to said harness, said strap forming two lengths (39a, 39b) connecting to said karabiners and a link (39c) connecting to said harness issuing from a central zone (40), the link (39c) comprising two strap thicknesses (36) sewn together, by stitches (41),
• a protective sleeve (42) surrounding the transmission elements (10), a border (43) of said sleeve being sewn, by stitches (41), to said strap, except over a central zone length (40).
